# EUROPÄISCHE PATENTSCHRIFT

(11) **EP 1 278 710 B1**
(45) Veröffentlichungstag und Bekanntmachung des Hinweises auf die Patenterteilung: **13.07.2005**
(21) Anmeldenummer: 01933845.8
(22) Anmeldetag: 18.04.2001
(51) Int. Cl.: C04B 38/00

(54) **FORMKÖRPER UND VERFAHREN ZU DEREN HERSTELLUNG**
SHAPED BODY AND PRODUCTION METHOD THEREOF
CORPS MOULE ET SON PROCEDE DE REALISATION

(30) Priorität: 28.04.2000 DE 10020955
(43) Veröffentlichungstag der Anmeldung: 29.01.2003
(73) Patentinhaber: Fraunhofer-Gesellschaft zur Förderung der angewandten Forschung e.V., 80686 München (DE)
(72) Erfinder: SCHMID, Hermann, 73433 Aalen (DE); GÖDEKE, Holger, 88480 Achstetten (DE)
(74) Vertreter: Reitzle, Helmut, Dr.
(86) Internationale Anmeldenummer: PCT/EP2001/004372
(87) Internationale Veröffentlichungsnummer: WO 2001/085643

(56) Entgegenhaltungen:
- CH-A- 502 964
- DE-A- 2 724 933
- US-A- 3 515 624

## Beschreibung

Die Erfindung betrifft einen Formkörper und ein Verfahren zur Herstellung solcher Formkörper. Die entsprechend hergestellten Formkörper sind wegen günstiger physikalischer und chemischer Eigenschaften für die verschiedensten Anwendungsgebiete und hier insbesondere im Bauwesen geeignet.

Im Baustoffsektor werden immer höhere Anforderungen an die verwendeten Baumaterialien und Bauelemente gestellt. Dies betrifft insbesondere den Leichtbau, Wärme- und Schallisolierung, Resistenz gegen chemische und physikalische Einflüsse sowie die Umweltverträglichkeit.

Insbesondere aus erstgenannten Gründen werden Leichtzuschlagstoffe verwendet, die ganz besonders eine Massereduzierung bewirken sollen. Dabei kann bei den herkömmlicherweise verwendeten Materialien die Dichte und demzufolge auch die entsprechende Masse nicht unter bestimmte Grenzen reduziert werden, da dann die erforderlichen Festigkeiten nicht mehr gegeben sind.

Für den Verbund bei der Herstellung von entsprechenden Bauelementen werden die Leichtzuschlagstoffe mit organischen bzw. anorganischen (z.B. Wasserglas) Bindemitteln versetzt und die gewünschten Eigenschaften zwar verbessert, aber immer noch nicht das gewünschte Niveau erreicht werden kann.

Bei der Verwendung von Binde- bzw. Sinterhilfsmitteln entsteht als Zwischenprodukt eine Masse, für deren Verarbeitung und Formgebung ein erheblicher technologischer Aufwand notwendig ist. So gestaltet sich das Befüllen der Formwerkzeuge mit dieser Masse, deren Konsistenz mit nassem Sand vergleichbar ist, als sehr arbeitsintensiv, wobei sich der Bearbeitungsvorgang nicht automatisieren läßt. Desweiteren verursachen die Bindemittel nicht nur erhebliche zusätzliche Kosten, sondern es entstehen häufig Materialkomposite, die nicht recyclebar sind.

So ist in DE 197 12 835 ein Formkörper aus einem Leichtwerkstoff bekannt, bei dem ein netzwerkartiger Verbund durch eine Flüssigphasensinterung einer Mischung, die aus einem Blähglas, Perlite oder Blähton mit Natronwasserglas erreicht werden soll. Ein solcher Formkörper wird dadurch hergestellt, dass der entsprechend ausgewählte Leichtzuschlagstoff und das Bindemittel (Natronwasserglas) vermischt, einem Formgebungsprozess unterzogen und bei Temperaturen im Bereich von 550 °C bis 1000 °C gesintert werden, so dass sich der netzwerkartige Verbund im Wesentlichen aus Natronkalkglas infolge der Flüssigphasensinterung ausbildet.

Mit den herkömmlicherweise verwendeten Binde- oder Sinterhilfsmitteln tritt in jedem Fall eine Erhöhung der Dichte, also auch bei gleichformatigen Bauelementen eine entsprechende Masseerhöhung auf.

Ein gemäß DE 197 12 835 A1 hergestellter Formkörper weist eine offenporige Struktur auf, die zwar bezüglich der gewünschten akustischen Eigenschaften Vorteile bringt, neben der geringeren Festigkeit können die verbliebenen Poren aber auch Feuchtigkeit aufnehmen und speichern, was sich häufig störend auswirkt.

Weiterhin ist aus der US-A-3 515 624 ein Formkörper bekannt der durch Versintern von Perliten hergestellt wird. In der DE 27 24 933 A ist ein Dachziegel beschrieben der aus Blähtonmaterial gebildet wird. Letzlich betrifft die CH 502 964 A ein Verfahren zur Herstellung eines Silikatschaumgranulates.

Es ist daher Aufgabe der Erfindung, Formkörper mit stark verringertem Aufwand herzustellen, die bei möglichst kleinen Rohdichten höhere Festigkeiten erreichen.

Erfindungsgemäß wird diese Aufgabe mit einem Formkörper gemäß Anspruch 1 und einem Verfahren zur Herstellung eines solchen Formkörpers gemäß Anspruch 3 gelöst. Vorteilhafte Ausgestaltungen und Weiterbildungen sind mit den in den untergeordneten Ansprüchen enthaltenen Merkmalen erreichbar.

Der erfindungsgemäße Formkörper besteht aus Blähglas als Leichtzuschlagstoff

, ohne dass die üblichen Binde- oder Sinterhilfsmittel weiter enthalten sind. Er wird aus dem Leichtzuschlagstoff gebildet, der miteinander versintert ist und so ein relativ leichter Formkörper mit relativ kleiner Rohdichte, aber höherer Festigkeit erhalten werden kann. Der Leichtzuschlagstoff, der erfindungsgemäß versintert wird, besitzt vor dem Versintern einen Restgehalt an Blähmittel von 0,1 bis 1 Masse-%, bevorzugt bis zu 0,5 Masse-%. Bei gasförmigem Blähmittel können 0,1 bis 95 Vol-% als Restgehalt auftreten. Der erfindungsgemäße Formkörper stellt ein geschlossenporiges Gefüge bzw. eine solche Struktur, z.B. im Gegensatz zu dem aus DE 197 12 835 A1 bekannten Formkörper dar. Es wird eine Rohdichte, von ≤ 500 kg/m³ bis hin zu Rohdichten im Bereich von 180 kg/m³, bei Druckfestigkeiten von ca. 1,6 N/mm², Biegefestigkeiten von ca. 0,9 N/mm² und Zugfestigkeiten von ca. 0,2 N/mm² erreicht.

Das Ausgangsgranulat kann mit Korngrößen im Bereich 0,25 bis 8 mm eingesetzt werden.

Der erfindungsgemäße Formkörper weist eine geringe Wärmeleitfähigkeit auf, ist nicht brennbar, säure- und basenbeständig, formstabil, resistent gegen Nagerbefall und unbedenklich recyclebar. Er nimmt nahezu keine Feuchtigkeit auf und kann demzufolge auf dem Baustoffsektor in vielen Fällen günstiger eingesetzt werden, als dies mit herkömmlichen Baustoffen bzw. Bauelementen möglich ist.

Gegenüber dem aus DE 197 12 835 A1 bekannten Formkörper wird eine um ein ca. 1/3 verringerte Rohdichte erzielt und die Festigkeit ebenfalls um ein 1/3 angehoben.

Bei Herstellung der erfindungsgemäßen Formkörper wird so vorgegangen, dass geschlossenporiges vorexpandiertes Blähglas-Granulat, als Leichtzuschlag verwendet wird, wobei in jedem Fall ein Restgehalt an Blähmittel von mindestens 0,1 bis 1 Masse % enthalten sein muss. Ein derartiges teilexpandiertes Granulat kann so gewonnen werden, dass durch eine entsprechende Prozeßführung der thermisch induzierte Blähprozess des Ausgangsgranulates nicht abgeschlossen wird und somit Blähmittel zunächst nicht vollständig umgesetzt wird. Dies kann beispielsweise durch kürzere Temperaturbehandlung geschehen. Unter Verwendung einer Granulatzusammensetzung, die oberhalb der Erweichungstemperatur nur eine geringe Temperaturabhängigkeit der Viskosität aufweist, kann so ein überwiegend gechlossenporiges Granulat erhalten werden, das über einen entsprechend erhöhten Restblähmittelgehalt verfügt. Das Blähmittel kann bei Einwirkung von Wärme, also auch beim Versintern und Nachexpandieren Gase, wie z.B. CO₂ abspalten.

Das so vorbereitete, fließfähige, vermischte Granulat wird in eine temperaturbeständige Form geschüttet, verdichtet und erwärmt. Dabei werden diese Granulatschüttungen bis zu einer Temperatur oberhalb der Erweichungstemperatur getempert. Durch die noch zur Verfügung stehenden Blähmittel erhöht sich beim Erweichen der Innendruck in den Porenräumen der Granulate, der zum Nachblähen der Granulate führt und somit eine zusätzliche Volumenexpansion hervorruft. Gleichzeitig versintern die einzelnen Granulate an den Kontaktstellen, wobei sich die Flächen bedingt durch die Volumenexpansion vergrößern. Die Vergrößerung der Kontaktflächen führt zum einen zu einer Erhöhung der intergranularen Bindungskräfte und reduziert zum anderen den offenen Porenraum. Bei der Herstellung ist auf eine homogene Temperaturveteilung zu achten, um ein gleichmäßiges Porengefüge zu erzielen. Da das vorexpandierte Ausgangsgranulat infolge der Erwärmung weiter einen Volumenzuwachs erfährt, ist es günstig, die Form mit dem Ausgangsgranulat nur mit einem Volumenanteil von mindestens 80 % und maximal 95 %, bevorzugt mit mindestens 85 Vol.-% auszufüllen. Dadurch kann bei der Erwärmung ein geschlossenporiges Gefüge erhalten werden; wobei der geschlossenporige Anteil mindestens 75 %, bevorzugt mehr als 90 % betragen sollte.

Nachfolgend soll die Erfindung anhand eines Ausführungsbeispieles erläutert werden.

Dabei zeigen:
- Figuren 1 und 2: Rasterelektronenmikriskopaufnahmen von versinterten Einzelgranulaten in unterschiedlicher Vergrößerung und
- Figuren 3 und 4: ein einzelnes Ausgangskorn vor und nach der Temperaturbehandlung.

Dabei wird ein Formkörper aus einem Blähglasgranulat, das unter der Handelsbezeichnung "Liaver" kommerziell erhältlich und beispielhaft in EP 0 661 240 B1 beschrieben ist, verwendet. Ein solches Blähglasgranulat wird in eine mindestens zweiteilige Edelstahlform mit den Abmessungen 740 x 420 x 50, deren Innenwandung mit einem anorganischen Trennmittel versehen ist, gegeben. Es werden dabei 3,5 kg Blähglasgranulat in einer Körnung zwischen 2 bis 4 mm eingesetzt, dessen Restkohlenstoffgehalt bei ca. 2,5 g/kg liegt. Nach dem Befüllen wird die Schüttung in der Form durch Rütteln egalisiert, so dass eine gleichmäßige Füllhöhe erreicht wird.

Nach dem Befüllen erfolgt die Erwärmung, wobei in einer ersten Erwärmungsstufe mit einer Heizrate von 5 K/min auf 650 °C und nach Erreichen dieser Temperatur dann im Anschluss mit einer Heizrate von 2 K/min auf eine Endtemperatur von ca. 750 °C erwärmt werden soll. Ist die Erweichungstemperatur des Blähglasgranulates erreicht, wird diese über eine Zeitdauer von 0,5 h gehalten, wobei es neben der weiteren Volumenexpansion zu einer Versinterung der Granulate unter Ausbildung eines überwiegend geschlossenporigen Gefüges kommt. Bei günstiger Temperaturführung kann ein Schaumgefüge erhalten werden, bei dem die ursprünglichen Korngrenzen des Granulate nicht mehr erkennbar sind.

Die Erwärmung kann in einem diskontinuierlichen Kammerofen oder in einem kontinuierlich betriebenen Durchschubofen durchgeführt werden.

Im Anschluss an das Erwärmen und Halten der Temperatur kann der fertige Formkörper nach Abkühlung, die günstigerweise über einen Zeitraum von 1 h bis zur Umgebungstemperatur reichen kann, entformt werden. Nach der Entformung können die Formkörper spanabhebend auf Maß gesägt werden.

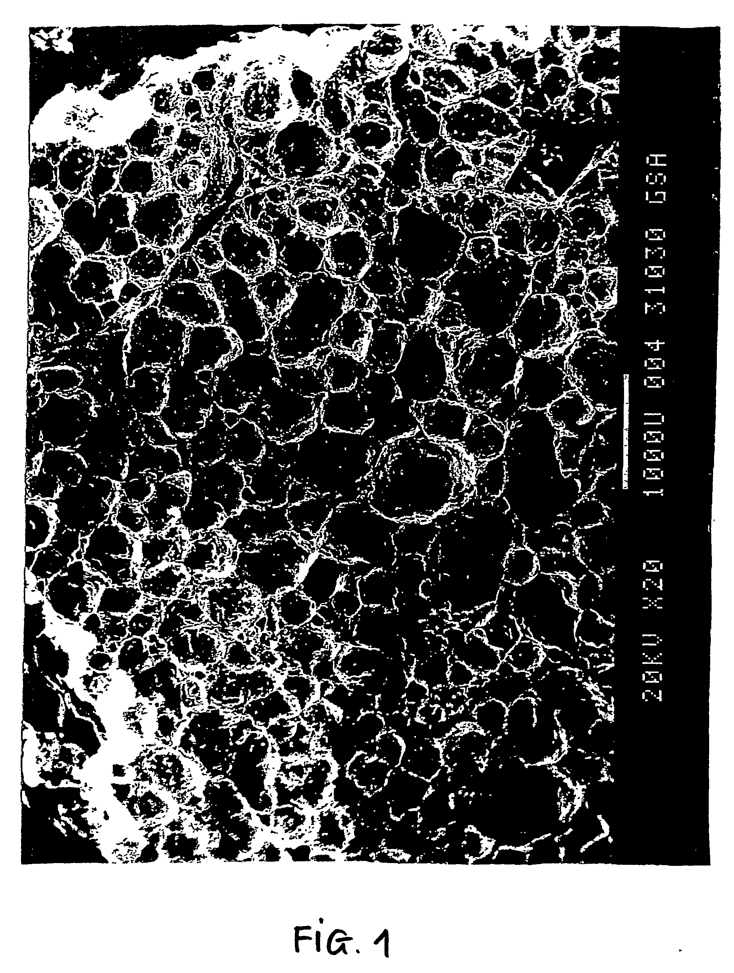

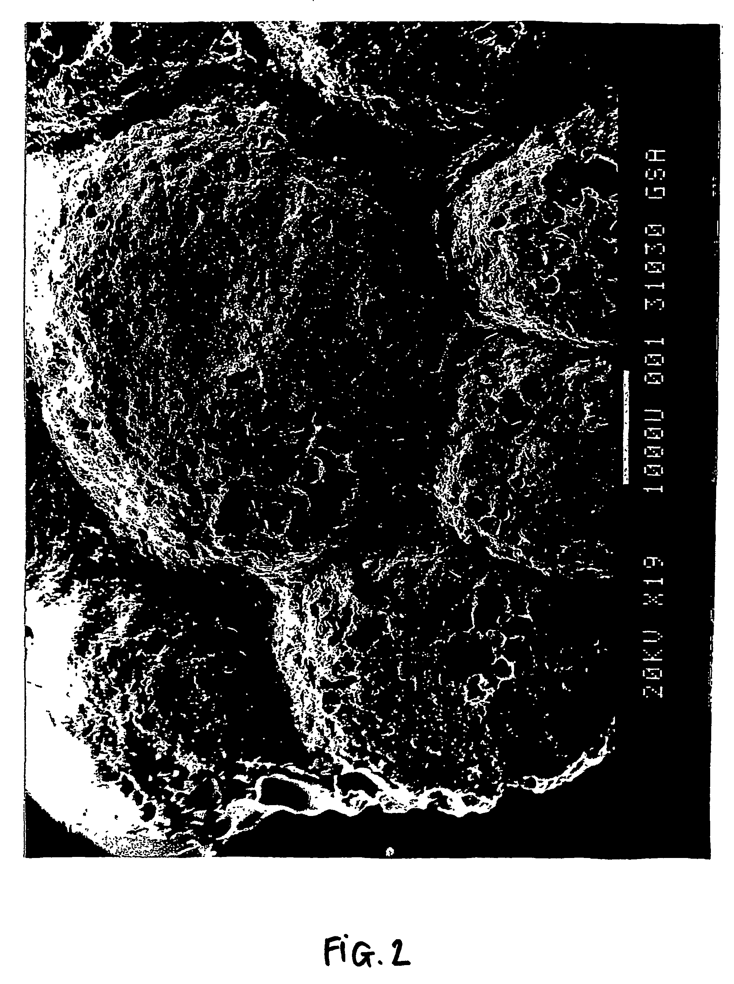

In den Figuren 1 und 2 sind REM-Aufnahmen in unterschiedlicher Vergrößerung gezeigt, die das geschlossne-porige Gefüge verdeutlichen.

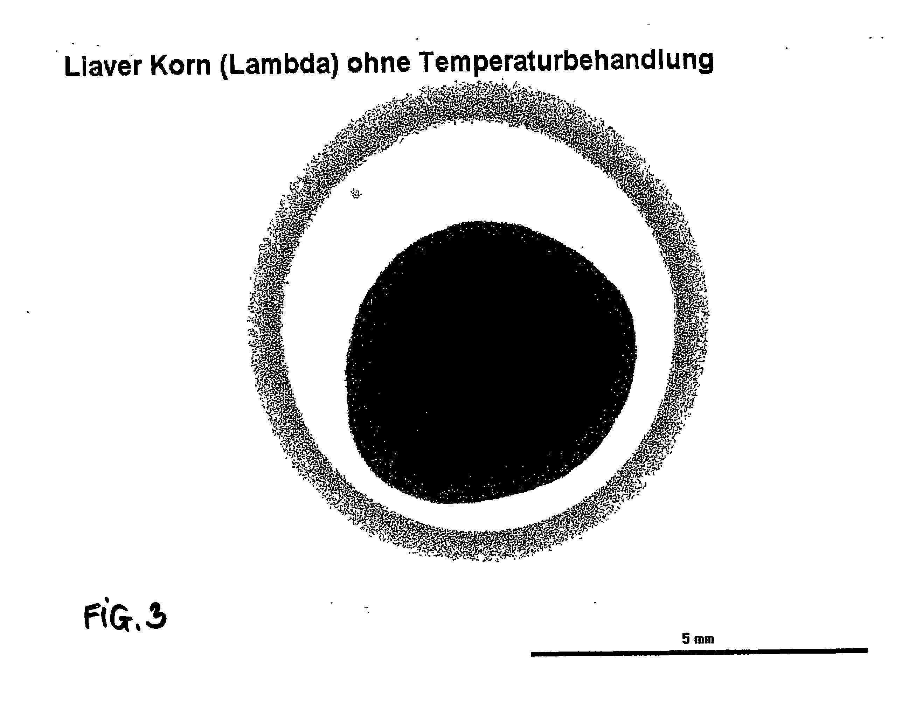

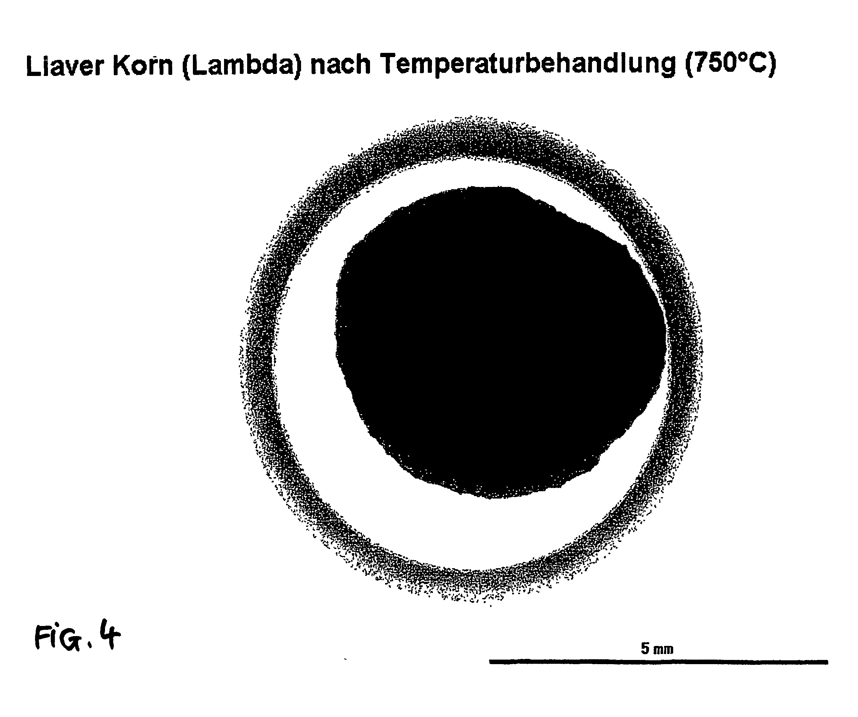

Die Figuren 3 und 4 zeigen ein Einzelkorn vor und nach der Temperaturbehandlung.

Die Tabelle 1 liefert Daten einer bildanalytischen Auswertung für einen Vergleich Ausgangsgranulat vor der Temperaturbehandlung und danach.

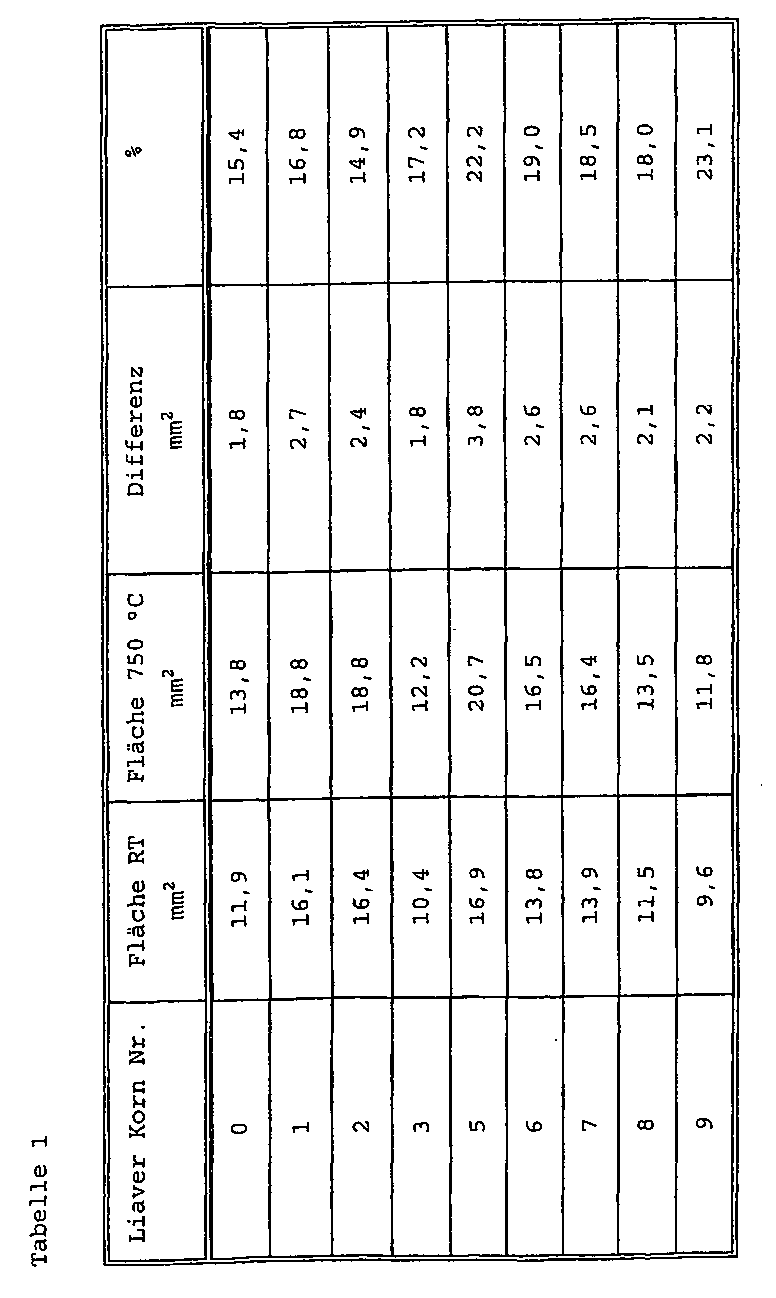

Ein so hergestellter Formkörper erreicht die Eigenschaften, die der Tabelle 2 entnommen werden können.

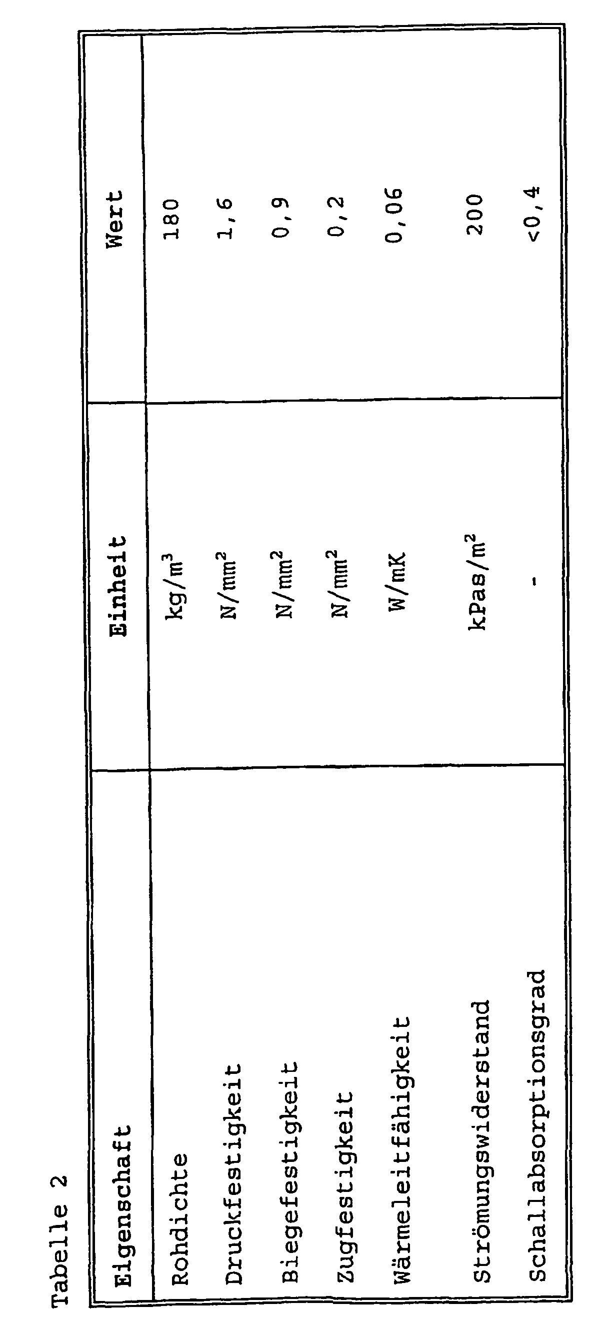

## Patentansprüche

1. Formkörper
**dadurch gekennzeichnet, dass** er ausschließlich aus miteinander versinterten Blähglasgranulat gebildet ist, wobei das Blähglasgranulat vor dem Versintern einen Restgehalt an Blähmittel von 0,1 bis 1 Masse-% aufweist und das Granulat ein überwiegend geschlossenporiges Gefüge aufweist.

2. Formkörper nach Anspruch 1,
**dadurch gekennzeichnet, dass** er eine Rohdichte kleiner als 500 kg/m³ aufweist.

3. Verfahren zur Herstellung von Formkörpern, bei dem
- thermisch vorexpandiertes Blähglas mit einem Restgehalt an Blähmitteln von 0,1 bis 1 Masse-%, als Granulat in eine Form gegeben wird;
- anschließend eine Erwärmung bis zu Temperaturen oberhalb der Erweichungstemperatur des Granulats, die zu einer weiteren Volumenexpansion und zum Versintern der Granulatoberflächen führt, durchgeführt und der Formkörper entformt wird.

4. Verfahren nach Anspruch 3,
**dadurch gekennzeichnet, dass** das Volumen der Form vor der Erwärmung mit mindestens 80 % und maximal 95 % mit dem Granulat ausgefüllt wird.

5. Verfahren nach Anspruch 3 oder 4,
**dadurch gekennzeichnet, dass** die Erwärmung in zwei Stufen durchgeführt wird.

6. Verfahren nach einem der Ansprüche 3 bis 5,
**dadurch gekennzeichnet, dass** ein Granulat mit Korngrößen im Bereich 0,25 bis 8 mm verwendet wird.

7. Verfahren nach einem der Ansprüche 3 bis 6,
**dadurch gekennzeichnet, dass** ein aus Recyclingglas unter Zugabe eines organischen Blähmittels erhaltenes, thermisch vorexpandiertes Blähglasgranulat verwendet wird.

8. Verfahren nach Anspruch 7,
**dadurch gekennzeichnet, dass** als Blähmittel ein Zuckerderivat verwendet wird.

9. Verfahren nach Anspruch 7 oder 8,
**dadurch gekennzeichnet, dass** die thermische Vorexpansion des Leichtzuschlagstoffes so durchgeführt wird, dass sich der Restgehalt an Blähmittel ergibt.

## Claims

1. Moulded body
**characterised in that**
it is made exclusively from expanded glass granules sintered with each other, the expanded glass granules having, prior to the sintering process, a residual content of blowing agent of between 0.1 and 1 per cent by mass, and the granules having a predominantly closed-pore structure.

2. Moulded body as in claim 1,
**characterised in that**
it has an apparent density of less than 500 kg/m³.

3. Method of producing moulded bodies, in which
- thermally pre-expanded expanded glass with a residual content of blowing agent of between 0.1 and 1 per cent by mass is put, in the form of granules, into a mould;
- following which a heating process is carried out up to temperatures above the distortion temperature of the granules, which results in a further expansion in volume and in the fusion of the surfaces of the granules; and the moulded body is removed from the mould.

4. Method as in claim 3,
**characterised in that**
the capacity of the mould prior to the heating process is filled with the granules to at least 80 % and up to 95 %.

5. Method as in claim 3 or 4,
**characterised in that**
the heating process is carried out in two stages.

6. Method as in one of claims 3 to 5,
**characterised in that**
granules with a grain size of between 0.25 and 8 mm are used.

7. Method as in one of claims 3 to 6,
**characterised in that**
thermally pre-expanded expanded glass granules are used which are made from recycled glass with the addition of an organic blowing agent.

8. Method as in claim 7,
**characterised in that**
the blowing agent used is a sugar derivative.

9. Method as in claim 7 or 8,
**characterised in that**
the thermal pre-expansion of the light aggregate is carried out in such a way that the result is the residual content of blowing agent.

## Revendications

1. Corps moulé, **caractérisé en ce qu'**il est formé exclusivement par des granulats de verre expansé, frittés entre eux, le granulat de verre expansé présentant avant le frittage une teneur résiduelle en agents d'expansion de 0,1 à 1 % en masse et le granulat présentant une structure essentiellement à pores fermés.

2. Corps moulé selon la revendication 1, caracténsé en ce qu'il présente une masse volumique apparente inférieure à 500 kg/m³.

3. Procédé de réalisation de corps moulés, dans lequel
- un verre expansé, ayant subi une pré-expansion par voie thermique et ayant une teneur résiduelle en agents d'expansion de 0,1 à 1 % en masse, est mtroduit en tant que granulat dans un moule ;
- le granulat est ensuite soumis à un chauffage jusqu'à des températures supérieures à la température de ramollissement du granulat, lequel entraîne une expansion volumique supplémentaire et le frittage des surfaces du granulat, puis le corps moulé est démoulé.

4. Procédé selon la revendication 3, **caractérisé en ce que** le volume du moule, avant le chauffage, est rempli avec au minimum 80 % et au maximum 95 % de granulat.

5. Procédé selon la revendication 3 ou 4, **caractérisé en ce que** le chauffage est effectué en deux étapes.

6. Procédé selon l'une quelconque des revendications 3 à 5, **caractérisé en ce que** l'on utilise un granulat avec une granulométrie dans le domaine de 0,25 à 8 mm.

7. Procédé selon l'une quelconque des revendications 3 à 6, **caractérisé en ce que** l'on utilise un granulat de verre expansé, qui est obtenu à partir de verre recyclé moyennant l'addition d'un agent d'expansion organique et qui est pré-expansé par voie thermique.

8. Procédé selon la revendication 7, **caractérisé en ce que** l'agent d'expansion utilisé est un dénvé du sucre.

9. Procédé selon la revendication 7 ou 8, **caractérisé en ce que** la pré-expansion par voie thermique des agrégats légers est effectuée de manière à obtenir la teneur résiduelle en agents d'expansion.
